# EUROPÄISCHE PATENTSCHRIFT

(11) **EP 2 984 573 B1**
(45) Veröffentlichungstag und Bekanntmachung des Hinweises auf die Patenterteilung: **28.02.2018**
(21) Anmeldenummer: 14716528.6
(22) Anmeldetag: 28.03.2014
(51) Int. Cl.: G06F 13/38

(54) **PERIPHERIEGERÄT MIT EINER AUDIOSCHNITTSTELLE ZUM ÜBERMITTELN VON DATEN**
PERIPHERAL DEVICE HAVING AN AUDIO INTERFACE FOR TRANSMITTING DATA
PÉRIPHÉRIQUE COMPRENANT UNE INTERFACE AUDIO POUR LA TRANSMISSION DE DONNÉES

(30) Priorität: 09.04.2013 DE 102013103533
(43) Veröffentlichungstag der Anmeldung: 17.02.2016
(73) Patentinhaber: Bundesdruckerei GmbH, 10969 Berlin (DE)
(72) Erfinder: MORGENER, Frank, 15537 Grünheide (DE)
(74) Vertreter: Patentship Patentanwaltsgesellschaft mbH
(86) Internationale Anmeldenummer: PCT/EP2014/056302
(87) Internationale Veröffentlichungsnummer: WO 2014/166761

(56) Entgegenhaltungen:
- US-A1- 2008 015 715
- US-A1- 2012 052 910
- US-A1- 2012 320 714

## Beschreibung

Die vorliegende Erfindung betrifft ein Peripheriegerät für einen Computer, wie beispielsweise ein Kartenlesegerät zum Auslesen von Identifikationsdokumenten, ein Datenverarbeitungssystem und ein Verfahren zum Übermitteln von Daten zwischen einem Computer und einem Peripheriegerät.

Beim Auslesen von Chipkarten über ein Kartenlesegerät werden auf dem Computer ein entsprechender Gerätetreiber und eine entsprechende Software (z.B. AusweisApp) installiert. Verwendet ein Benutzer einen Webbrowser, ist es ohne vorherige Installation einer Software nicht möglich, auf die Website eines Dienstanbieters zu gehen, um dort den elektronischen Identitätsnachweis durchzuführen. Im Kontext des Webbrowsers gibt es ohne Plug-Ins jedoch keine Schnittstelle zu Kartenlesern oder gar eine Identifizierungsfunktion (eiD-Funktion). Im Allgemeinen ist daher ein Gerätetreiber und entsprechende Software erforderlich, um Peripheriegeräte im Internet verwenden zu können. Selbst falls eine Plugand-Play-Funktion verwendet wird, existieren im Browser nur sehr wenige standardisierte Schnittstellen zu Peripheriegeräten. Bei der Verwendung einer Identifikationsfunktion, die von einem Kartenlesegerät ausgeführt wird, benötigt der Anwender nicht nur die entsprechende Hardware, wie beispielsweise einen neuen Personalausweis (nPA), Computer und Kartenleser, sondern die Komponenten sollten auch für den Betrieb auf dem Computer vorbereitet sein. US2012/320714 offenbart ein Kartenlesegerät, das eine Audioschnittstelle zum Übermitteln von Daten zu einem Computer über ein Audiofrequenzsignal umfasst. Es ist die der Erfindung zugrundeliegende Aufgabe, ein Peripheriegerät für einen Computer sowie ein Verfahren zum Übermitteln von Daten anzugeben, bei dem Daten sicher und ohne Installation eines proprietären Treibers für das Peripheriegerät übertragen werden können. Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Peripheriegerät für einen Computer gelöst, wobei das Peripheriegerät eine Audioschnittstelle zum Übermitteln von Daten zu dem Computer über ein Audiofrequenzsignal umfasst. Dadurch wird beispielsweise der technische Vorteil erreicht, dass eine Datenübermittlung über eine Audioschnittstelle über Audiofrequenzsignale erfolgt und die Installation eines spezifischen Treibers unterbleiben kann.

In einer vorteilhaften Ausführungsform des Peripheriegeräts ist das Peripheriegerät ein Kartenlesegerät zum Auslesen von Wert- und Sicherheitsdokumenten. Unter einem Wert- und Sicherheitsdokument kann im Folgenden ein Identifikationsdokument, wie beispielsweise ein Personalausweis oder Pass, eine Banknote, eine Briefmarke, eine Banking-Card oder eine Kreditkarte verstanden werden. Dadurch wird beispielsweise der technische Vorteil erreicht, dass Wert- und Sicherheitsdokumente sicher und ohne Installation eines zusätzlichen Treibers ausgelesen werden können

In einer weiteren vorteilhaften Ausführungsform des Peripheriegeräts implementiert die Audioschnittstelle einen Modemstandard. Dadurch wird beispielsweise der technische Vorteil erreicht, dass in einfacher Weise aus dem Modembereich bekannte Hardware in das Peripheriegerät integriert werden kann.

In einer weiteren vorteilhaften Ausführungsform des Peripheriegeräts ist der Modemstandard einer der Standards: Bell 103M & 212A, V.21, V.22, V.22bis, V.23, V.29, V.32, V.32bis, V.32ter, V.34, V.34bis, V.42, V.42bis, V.44, V.90 oder V.92. Dadurch wird beispielsweise der technische Vorteil erreicht, dass besonders geeignete Protokolle für die Kommunikation verwendet werden können.

In einer weiteren vorteilhaften Ausführungsform des Peripheriegeräts umfasst das Peripheriegerät einen Klinkenstecker oder eine Klinkenbuchse zum Koppeln des Peripheriegeräts mit einem Audioanschluss des Computers. Dadurch wird beispielsweise der technische Vorteil erreicht, dass das Peripheriegerät mit einem Audioanschluss des Computers gekoppelt werden kann.

In einer weiteren vorteilhaften Ausführungsform des Peripheriegeräts umfasst das Peripheriegerät einen USB-Anschluss. Dadurch wird beispielsweise der technische Vorteil erreicht, dass eine zusätzliche Kommunikation über ein USB-Kabel erfolgen kann.

In einer weiteren vorteilhaften Ausführungsform des Peripheriegeräts umfasst das Peripheriegerät eine Frequenzumtastungseinrichtung zum Umtasten von digitalen Daten in Audiofrequenzsignale. Dadurch wird beispielsweise der technische Vorteil erreicht, dass die digitalen Daten auf einfache Weise in Audiofrequenzsignale umgewandelt werden können. Gemäß einem zweiten Aspekt der Erfindung wird die Aufgabe durch ein Datenverarbeitungssystem mit einem Computer mit einer Audioschnittstelle und einem mit der Audioschnittstelle verbundenen Peripheriegerät nach dem ersten Aspekt gelöst. Dadurch wird beispielsweise ebenfalls der technische Vorteil erreicht, dass eine Datenübermittlung über eine Audioschnittstelle über Audiofrequenzsignale erfolgt und die Installation eines spezifischen Treibers unterbleiben kann.

In einer vorteilhaften Ausführungsform des Datenverarbeitungssystems umfasst der Computer eine Umwandlungseinrichtung zum Umwandeln des Audiofrequenzsignals in digitale Audiodaten. Dadurch wird beispielsweise der technische Vorteil erreicht, dass die Audiofrequenzsignale als Audiodaten, wie beispielsweise MP3-Daten, über ein Netzwerk versendet werden können.

In einer weiteren vorteilhaften Ausführungsform des Datenverarbeitungssystems umfasst das Datenverarbeitungssystem einen Server zum Empfangen der Audiodaten von dem Computer. Dadurch wird beispielsweise der technische Vorteil erreicht, dass die Audiodaten von dem Server verarbeitet werden können, um die Daten des Peripheriegerätes zu erhalten.

Gemäß einem dritten Aspekt der Erfindung wird die Aufgabe durch ein Verfahren zum Übermitteln von Daten zwischen einem Computer und einem Peripheriegerät gelöst, mit den Schritten eines Auslesens von Daten mittels des Peripheriegeräts; eines Umwandelns der Daten in ein Audiofrequenzsignal in dem Peripheriegerät; und eines Übermittelns des Audiofrequenzsignals an den Computer. Dadurch wird beispielsweise ebenfalls der technische Vorteil erreicht, dass eine Datenübermittlung über eine Audioschnittstelle über Audiofrequenzsignale erfolgt und die Installation eines spezifischen Treibers unterbleiben kann.

In einer vorteilhaften Ausführungsform des Verfahrens umfasst das Verfahren den Schritt eines Umwandelns des Audiofrequenzsignals in digitale Audiodaten mittels des Computers. Dadurch wird beispielsweise der technische Vorteil erreicht, dass die Daten des Peripheriegerätes mittelbar über Audiodaten über ein Netzwerk übertragen werden können.

In einer weiteren vorteilhaften Ausführungsform des Verfahrens umfasst das Verfahren den Schritt eines Sendens der umgewandelten Audiodaten von dem Computer an einen Server. Dadurch wird beispielsweise der technische Vorteil erreicht, dass die Daten des Peripheriegerätes von dem Server verarbeitet werden können, beispielsweise um die Daten eines Identifikationsdokumentes zu erhalten.

In einer weiteren vorteilhaften Ausführungsform des Verfahrens umfasst das Verfahren den Schritt eines Empfangens von Audiodaten von einem Server an dem Computer. Dadurch wird beispielsweise der technische Vorteil erreicht, dass Daten und Befehle für das Peripheriegerät direkt durch den Computer, beispielsweise in einem Browser, in Audiofrequenzsignale für das Peripheriegerät umgewandelt werden können.

In einer weiteren vorteilhaften Ausführungsform des Verfahrens umfasst das Verfahren den Schritt eines Umwandelns der von dem Server empfangenen Audiodaten in ein Audiofrequenzsignal in dem Computer. Dadurch wird beispielsweise der technische Vorteil erreicht, dass das Peripheriegerät über Audiofrequenzsignale angesteuert werden können.

In einer weiteren vorteilhaften Ausführungsform des Verfahrens umfasst das Verfahren den Schritt eines Übermittelns des Audiofrequenzsignals von dem Computer an das Peripheriegerät. Dadurch wird beispielsweise ebenfalls der technische Vorteil erreicht, dass eine Datenübertragung von dem Server zu dem Peripheriegerät über Audiosignale erfolgt.

Ausführungsbeispiele der Erfindung sind in den Zeichnungen dargestellt und werden im Folgenden näher beschrieben.

Es zeigen:
- Fig. 1: eine schematische Ansicht eines Datenverarbeitungssystems mit einem Kartenlesegerät als Peripheriegerät, das mit einer Audioschnittstelle gekoppelt ist; und
- Fig. 2: ein Blockdiagramm des Verfahrens.

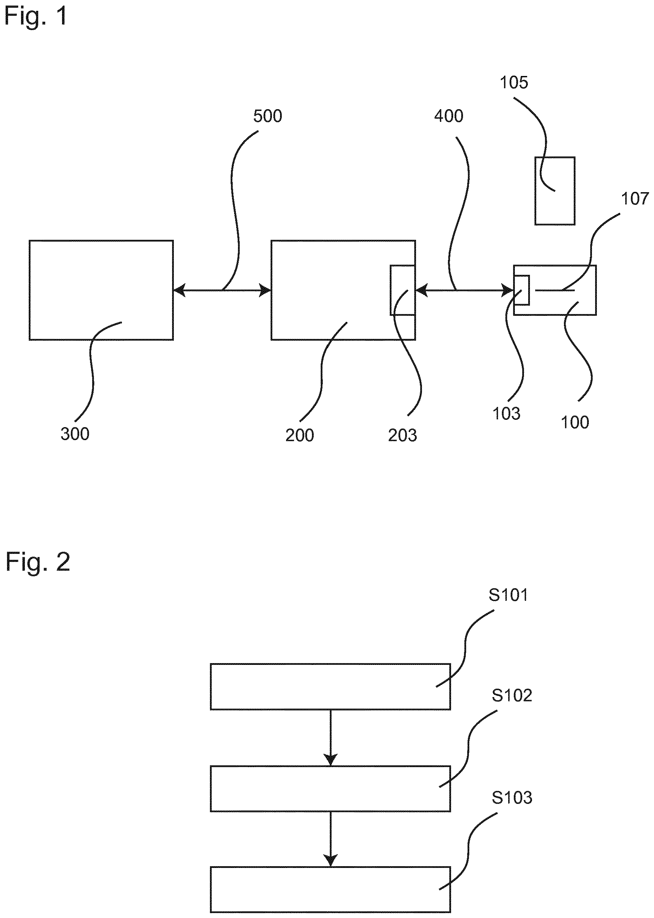

Fig. 1 zeigt eine schematische Ansicht eines Datenverarbeitungssystems mit einem Kartenlesegerät als Peripheriegerät, das mit einer Audioschnittstelle gekoppelt ist. Das Datenverarbeitungssystem umfasst einen Server 300, der über eine Netzwerkschnittstelle Audiodaten 500 mit einem Computer 200 austauscht. Audiodaten 500 sind digitale Daten, wie beispielsweise MP3- oder MPEG-Audiodaten, die dazu vorgesehen sind, in Audiofrequenzsignale 400 umgewandelt zu werden.

Weiter umfasst das Datenverarbeitungssystem ein Kartenlesegerät 100. Das Kartenlesegerät 100 umfasst beispielsweise einen Schlitz 107 zum Einsetzen eines Identifikationsdokumentes 105 oder einer Bankkarte, das oder die einen elektronischen Chip oder Magnetstreifen aufweist. Die Bankkarte dient beispielsweise zum Autorisieren einer Transaktion im Rahmen einer Online-Überweisung. In diesem Fall sind auf Basis der Datenkommunikation zwischen Host (Server) und Kartenlesegerät 100 im Rahmen des Decoder-Standards Kommandos definiert, um die entsprechenden Operationen im Kartenlesegerät 100 auszulösen.

Die Daten des Chips oder Magnetstreifens werden von dem Kartenlesegerät 100 ausgelesen. Das Kartenlesegerät 100 umfasst eine Schnittstelle 103 zum Übermitteln von Audiofrequenzsignalen 400, die mit einer Audioschnittstelle 203 des Computers 200 verbunden ist. Audiofrequenzen sind beispielsweise Frequenzen zwischen 20 und 20000 Hz. Die Audioschnittstelle 203 des Computers 200 wird beispielsweise durch eine in den Computer eingesetzte Sound- oder Audiokarte gebildet.

Zur Übertragung werden die Daten des elektronischen Chips oder Magnetstreifens des Identifikationsdokumentes 105 in Audiofrequenzsignale umgewandelt. Dadurch wird es möglich, dass Peripheriegeräte, wie beispielsweise das sichere Kartenlesegerät 100, durch einen Webserver angesprochen werden, ohne dass hierzu ein Gerätetreiber oder eine Middleware auf dem Computer 200 erforderlich ist. Für Webbrowser sind Spezifikationen verfügbar, die es möglich machen, direkte Audioeingaben und - Ausgaben über eine Audioschnittstelle 203 zu ermöglichen. Der Server 300 steuert somit über die Schnittstelle 203 des Computers 200 das Kartenlesegerät 100. Über einen Audioeingang der Audioschnittstelle 203, beispielsweise eine Audioaufnahme, sendet das Kartenlesegerät 100 Signale zurück an den Server 300. Dadurch kann eine sichere "Fernsteuerung" des Kartenlesegerät 100 durch den Server 300 realisiert werden, da das Kartenlesegerät 100 selbst über eine Filterlogik und eine sichere Anzeige- und Eingabemöglichkeit verfügt, die eine sichere Nutzerinteraktion sicherstellen.

Für die akustische Kodierung der zwischen dem Kartenlesegerät 100 und dem Server 300 ausgetauschten Daten, kann beispielsweise ein Verfahren zum Einsatz kommen, das zum Versenden von Faxen auf Telefonleitungen genutzt wird oder ein Modemprotokoll. Über einen so etablierten Datenkanal kann beispielsweise das USB-Protokoll verwendet werden, um verschiedene Typen von Peripheriegeräten zu unterstützen. Mittels akustischer Signale wird der Datenkanal etabliert. Die Übertragung funktioniert ohne Zusatzsoftware und Gerätetreiber, unabhängig davon wie die Daten in dem Kanal formatiert sind. Die Verwendung von USB hat den Vorteil, dass eventuell vorhandene USB-Logik sowohl im Server als auch im Kartenleser wiederverwendet werden kann. Dies ist insbesondere dann von Vorteil, wenn der Kartenleser zusätzlich zur Audio-Schnittstelle noch eine USB-Schnittstelle besitzt.

Dadurch entfällt die Notwendigkeit zu Zusatzsoftware oder Gerätetreiber auf dem Computer 200 des Benutzers zu installieren. Über die akustischen Signale können beliebige Peripheriegeräte vom Server 300 aus direkt angesprochen werden.

Die Datenübertragung auf einem Audio-Kanal kann mittels einer Modulation/Demodulation der digitalen Daten, wie beispielsweise durch Frequenzumtastung. Dabei kann die Datenkommunikation zwischen dem Server 300 und dem Kartenleser 100 mit einem speziellen Protokoll gestaltet werden, wie beispielsweise einem USB-Protokoll. Daneben ist es möglich eine Reihe von Standards zu verwenden, die die Datenkommunikation von Modems standardisieren. Diese Standards umfassen beispielsweise Bell 103M & 212A, V.21, V.22, V.22bis, V.23, V.29, V.32, V.32bis, V.32ter, V.34, V.34bis, V.42, V.42bis, V.44, V.90 oder V.92.

Vorteilhaft ist es, dass in diesen Standards ein Handshake mit Trainingsphase und Protokollparametern für beispielsweise eine Datenkompression existiert. Um eine kürzere Initialisierungszeit für den Handshake zu realisieren, wie beispielsweise von 10s bei V.92, kann eine geringere Datenrate und somit eine robustere Modulation verwendet werden. Es ist ebenfalls möglich ein Frequenzumtastungsverfahren (FSK - Frequency Shift Keying), ohne vorangehenden Handshake zu verwenden.

Da bei vielen Identifikationsdokumenten 105 lediglich geringe Datenmengen von beispielsweise drei Kilobytes zwischen dem Kartenlesegerät 100 und dem Computer 200 übertragen werden, fällt ein geringerer Durchsatz nicht stark ins Gewicht.

Statt einer USB-artigen Datenkommunikation kann auch eine Kommunikation mit einem Bluetooth-Standard realisiert werden, bei dem bestimmte Geräteklassen oder bestimmte Services von den Clients angeboten werden. Insbesondere kann der Kartenleser einen Human-Interface-Device-Dienst (HID-Service) zum Datentransfer vom und zum Kartenlesegerät 100 zusammen mit einem Device Information Service verwenden, der die Eigenschaften des Kartenlesegerät 100 propagiert.

Ein Geräte-agnostisches Datenprotokoll kann über einen akustischen Datenkanal gebildet werden. Verschiedene Teile des USB-Standards können mehrere Schichten in dem Modell spezifizieren, wie beispielsweise einen Transport-Layer. Dabei können die Geräteklassen des USB-Standards und insbesondere die Smart-Card-Klassen CCID (Circuit(s) Cards Interface Devices) und ICCD (Integrated Circuit(s) Card Devices) für Smart Cards mit USB Interface verwendet werden.

Die folgende Beschreibung nimmt die CCID-Geräteklasse als Beispiel, um diese auf den Audio-Datenkanal zwischen dem Computer 200 und dem Kartenlesegerät 100 anzuwenden. Der Computer 200 (USB-Host) fragt vom Kartenlesegerät 100 (USB-Client) einen GeräteDeskriptor ab (CCID). Dieser umfasst den Gerätetyp und die Eigenschaften des Kartenlesegerätes 100, auf welche Weise beispielsweise das Kartenlesegerät 100 eine sichere PIN-Eingabe nach CCID unterstützt oder nicht.

Nach CCID existieren mehrere Endpunkte/Kanälen mit verschiedenen Funktionen zwischen USB-Server und USB-Client/CCID, d.h. dem Kartenlesegerät 100. Über eine bidirektionale Control-Pipe (CCID) werden der Gerätedeskriptor, ein Bulk-In sowie ein Bulk-Out (CCID) übertragen, über die die eigentlichen Daten an die Smartcard übertragen werden. Eine Interrupt-Pipe ist optional.

Es existieren zwei mögliche Verfahrensweisen einen Control-Kanal und einen Bulk-Kanal auf einen einzigen bidirektionalen Audiokanal abzubilden.

Zum einen können Container verwendet werden, die angeben, welchem Kanal ein Paket zuzuordnen ist. Dies kann beispielsweise über ein vorangestelltes Tag/Wert-Paar realisiert werden, das angibt, dass es sich um ein Control- oder Bulk-Paket handelt.

Zum anderen kann die Control-Pipe nur für die (De-)Initialisierung sowie Konfiguration, wie beispielsweise Timeouts, des USB-Geräts im laufenden Betrieb genutzt werden. In diesem Fall kann das Protokoll dahingehend verschlankt werden, dass es ohne Control-Kommandos im laufenden Betrieb auskommt. USB-Host und USB-Client können sich dann darauf einigen, dass vor jeglicher Kommunikation der Gerätedeskriptor in dem Audiokanal übertragen wird und folgenden Nachrichten ausschließlich vom Typ "Bulk" sind.

Für den laufenden Betrieb verwendet der USB-Server die USB-Bulk-Kommandos, um Daten an die Chipkarte des Identifikationsdokuments 105 zu senden, das Kartenlesegerät ein-/auszuschalten oder eine PIN-Verifikation durchzuführen.

Die Gerätklasse CCID verwendet beispielsweise folgende Befehle und Nachrichten:

| **Nachrichtenname** | **bMessageType** | **Antwortnachricht(en)** | **Unterbrechungsfähig** |
|---|---|---|---|
| PC_to_RDR_IccPowerOn | 62h | RDR_to_PC_DataBlock | Ja |
| PC_to_RDR_IccPowerOff | 63h | RDR_to_PC_SlotStatus | Nein |
| PC_to_RDR_GetSlotStatus | 65h | RDR_to_PC_SlotStatus | Nein |
| PC_to_RDR_XfrBlock | 6Fh | RDR_to_PC_DataBlock | Ja |
| PC_to_RDR_GetParameters | 6Ch | RDR_to_PC_Parameters | Nein |
| PC_to_RDR_ResetParameters | 6Dh | RDR_to_PC_Parameters | Nein |
| PC_to_RDR_SetParameters | 61h | RDR_to_PC_Parameters | Nein |
| PC_to_RDR_Escape | 6Bh | RDR_to_PC_Escape | Ja |
| PC_to_RDR_IccClock | 6Eh | RDR_to_PC_SlotStatus | Nein |
| PC_to_RDR_T0APDU | 6Ah | RDR_to_PC_SlotStatus | Nein |
| PC_to_RDR_Secure | 69h | RDR_to_PC_DataBlock | Ja |
| PC_to_RDR_Mechanical | 71h | RDR_to_PC_SlotStatus | Ja |
| PC_to_RDR_Abort | 72h | RDR_to_PC_SlotStatus | Ja |
| PC_to_RDR_SetDataRateAnd-ClockFrequency | 73h | RDR_to_PC_DataRate-AndClockFrequency | Nein |

Eine Application Protocol Data Unit (APDU) als Kommunikationseinheit zwischen Chipkarte und der Chipkartenanwendung vom Server wird mit dem *PC_to_RDR_XfrBlock* übermittelt. Die Chipkarte antwortet daraufhin mit einer Antwort-APDU (Response APDU), die das Kartenlesegerät 100 in einem *RDR_to_PC_DataBlock-*Kommando an den Server schickt.

Die normale PIN-Verifikation wird mit dem Kommando *PC_to_RDR_Secure* initialisiert. Ein PACE des Kommandos *PC_to_RDR_Secure* kann in den USB-Standard integriert werden. Dies kann beispielsweise durch Definition eines neuen Kommandos zur PIN-Verifikation ohne PIN-Übertragung insbesondere für PACE geschehen, beispielsweise als *PC_to_RDR_PACE.* Daneben kann eine Erweiterung des Kommandos *PC_to_RDR_Secure* erfolgen, so dass analog zur PIN-Verifikation mit PIN-Übertragung das Kommando um eine Datenstruktur zur Durchführung von PACE ergänzt werden kann. Weiter kann das Kommando *PC_to_RDR_Escape* zum Auslösen von spezifischen Funktionen des Kartenlesegerätes 100 dienen. Schließlich kann eine Datenübertragung und Auslösen von PACE per Pseudo-APDU unter Nutzung des Kommandos *PC_to_RDR_XfrBlock* durchgeführt werden.

Bei echten USB-CCID-Kartenlesegeräten mit PACE-Funktion kann die Datenübertragung und das Auslösen von PACE per Pseudo-APDU gewählt werden. Ein alternativer Aufruf für die PIN-Verifikation ist mittels des Kommandos *PC_to_RDR_Secure* gegeben.

Bei einem Kartenlesegerät über Audio kann mit einem Gerätedeskriptor und der bloßen Nutzung der Kommandos *PC_to_RDR_XfrBlock*/ *RDR_to_PC_DataBlock* bereits die komplette Datenkommunikation inklusive PACE und PIN-Verifikation abgebildet werden. Davon ausgehend kann das Protokoll zwischen Server und Kartenlesergerät noch weiter verschlankt werden. In Hinblick auf andere USB-Peripheriegeräte, die ebenfalls diese Art der Paket-basierten Datenkommunikation nutzen, kann der allgemeine Fall abgedeckt werden.

Fig. 2 zeigt ein Blockdiagramm des Verfahrens zum Übermitteln von Daten zwischen dem Computer 200 und dem Kartenlesegerät 100. Das Verfahren umfasst den Schritt S101 eines Auslesens von Daten eines Identifikationsdokumentes 105 mittels des Kartenlesegeräts 100, den Schritt S102 eines Umwandelns der Daten in ein Audiofrequenzsignal 400 in dem Kartenlesegerät 100 und eines Übermittelns des Audiofrequenzsignals 400 an den Computer 200. Zusätzlich zu diesen Schritten können weitere Schritte vorgesehen sein.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kartenlesegerät/Peripheriegerät
- 103: Audioschnittstelle
- 105: Identifikationsdokument/Wert- und Sicherheitsdokument
- 107: Kartenschacht
- 200: Computer
- 203: Audioschnittstelle
- 300: Server
- 400: Audiofrequenzsignal
- 500: Audiodaten

## Patentansprüche

1. Peripheriegerät (100) für einen Computer (200), wobei das Peripheriegerät (100) eine Audioschnittstelle (103) zum Übermitteln von Daten zu dem Computer (200) über ein Audiofrequenzsignal (400) umfasst, wobei das Peripheriegerät (100) ein Kartenlesegerät zum Auslesen von Wert- und Sicherheitsdokumenten (105) ist, **dadurch gekennzeichnet, dass** die Audioschnittstelle (103) einen Modemstandard implementiert.

2. Peripheriegerät (100) nach einem der vorangehenden Ansprüche, wobei das Peripheriegerät (100) einen Klinkenstecker oder eine Klinkenbuchse zum Koppeln des Peripheriegeräts (100) mit einem Audioanschluss des Computers (200) umfasst.

3. Peripheriegerät (100) nach einem der vorangehenden Ansprüche, wobei das Peripheriegerät (100) einen USB-Anschluss umfasst.

4. Peripheriegerät (100) nach einem der vorangehenden Ansprüche, wobei das Peripheriegerät (100) eine Frequenzumtastungseinrichtung zum Umtasten von digitalen Daten in Audiofrequenzsignale (400) umfasst.

5. Datenverarbeitungssystem mit einem Computer (200) mit einer Audioschnittstelle (203) und einem mit der Audioschnittstelle (203) verbundenen Peripheriegerät (100) nach einem der Ansprüche 1 bis 4.

6. Datenverarbeitungssystem nach Anspruch 5, wobei der Computer eine Umwandlungseinrichtung zum Umwandeln des Audiofrequenzsignals (400) in digitale Audiodaten (500) umfasst.

7. Datenverarbeitungssystem nach Anspruch 6, wobei das Datenverarbeitungssystem einen Server (300) zum Empfangen der Audiodaten (500) von dem Computer (200) umfasst.

8. Verfahren zum Übermitteln von Daten zwischen einem Computer (200) und einem Peripheriegerät (100), wobei das Peripheriegerät (100) eine Audioschnittstelle (103) zum Übermitteln von Daten zu dem Computer (200) über ein Audiofrequenzsignal (400) umfasst, wobei das Peripheriegerät (100) ein Kartenlesegerät zum Auslesen von Wert- und Sicherheitsdokumenten (105) ist, wobei die Audioschnittstelle (103) einen Modemstandard implementiert, mit den Schritten:
- Auslesen (S101) von Daten mittels des Peripheriegeräts (100);
- Umwandeln (S102) der Daten in ein Audiofrequenzsignal (400) in dem Peripheriegerät (100);
- Übermitteln (S103) des Audiofrequenzsignals (400) an den Computer (200) über die Audioschnittstelle (103).

9. Verfahren nach Anspruch 8, wobei das Verfahren den Schritt eines Umwandelns des Audiofrequenzsignals (400) in digitale Audiodaten (500) mittels des Computers (200) umfasst.

10. Verfahren nach Anspruch 9, wobei das Verfahren den Schritt eines Sendens der umgewandelten Audiodaten (500) von dem Computer (200) an einen Server (300) umfass.

11. Verfahren nach einem der Ansprüche 8 bis 10, wobei das Verfahren den Schritt eines Empfangens von Audiodaten (500) von einem Server (300) an dem Computer (200) umfasst.

12. Verfahren nach Anspruch 11, wobei das Verfahren den Schritt eines Umwandelns der empfangenen Audiodaten (500) in ein Audiofrequenzsignal (400) in dem Computer (200) umfasst.

13. Verfahren nach Anspruch 12, wobei das Verfahren den Schritt eines Übermittelns des Audiofrequenzsignals (400) von dem Computer (200) an das Peripheriegerät (100) umfasst.

## Claims

1. Peripheral device (100) for a computer (200), wherein the peripheral device (100) comprises an audio interface (103) for transmitting data to the computer (200) via an audio frequency signal (400), wherein the peripheral device (100) is a card reader for reading value and security documents (105), **characterized in that** the audio interface (103) implements a modem standard.

2. Peripheral device (100) according to any one of the preceding claims, wherein the peripheral device (100) comprises a jack plug or a jack socket for coupling the peripheral device (100) with an audio port of the computer (200).

3. Peripheral device (100) according to any one of the preceding claims, wherein the peripheral device (100) comprises a USB-port.

4. Peripheral device (100) according to any one of the preceding claims, wherein the peripheral device (100) comprises a frequency shift keying device for keying digital data in audio frequency signals (400).

5. Data processing system comprising a computer (200) comprising an audio interface (203) and a peripheral device (100) according to any one of claims 1 to 4, which is connected with the audio interface (203).

6. Data processing system according to claim 5, wherein the computer comprises a conversion device for converting the audio frequency signal (400) into digital audio data (500).

7. Data processing system according to claim 6, wherein the data processing system comprises a server (300) for receiving the audio data (500) from the computer (200).

8. Method for transmitting data between a computer (200) and a peripheral device (100), wherein the peripheral device (100) comprises an audio interface (103) for transmitting data to the computer (200) via an audio frequency signal (400), wherein the peripheral device (100) is a card reader for reading value and security documents (105), wherein the audio interface (103) implements a modem standard, comprising the steps:
- reading out (S101) data by means of the peripheral device (100);
- converting (S102) the data into an audio frequency signal (400) in the peripheral device (100);
- transmitting (S103) the audio frequency signal (400) to the computer (200) via the audio interface (103).

9. Method according to claim 8, wherein the method comprises the step of converting the audio frequency signal (400) into digital audio data (500) by means of the computer (200).

10. Method according to claim 9, wherein the method comprises the step of sending the converted audio data (500) from the computer (200) to a server (300).

11. Method according to any one of claims 8 to 10, wherein the method comprises the step of receiving audio data (500) from the server (300) at the computer (200).

12. Method according to claim 11, wherein the method comprises the step of converting the received audio data (500) into an audio frequency signal (400) in the computer (200).

13. Method according to claim 12, wherein the method comprises the step of transmitting the audio frequency signal (400) from the computer (200) to the peripheral device (100).

## Revendications

1. Appareil périphérique (100) destiné à un ordinateur (200), dans lequel l'appareil périphérique (100) comprend une interface audio (103) destinée à transmettre des données à l'ordinateur (200) par l'intermédiaire d'un signal audiofréquence (400), dans lequel l'appareil périphérique (100) est un appareil lecteur de cartes destiné à lire des documents de valeur et de sécurité (105), **caractérisé en ce que** l'interface audio (103) met en oeuvre une norme de modem.

2. Appareil périphérique (100) selon l'une quelconque des revendications précédentes, dans lequel l'appareil périphérique (100) comprend une fiche jack ou une douille jack destinée à coupler l'appareil périphérique (100) à un port audio de l'ordinateur (200).

3. Appareil périphérique (100) selon l'une quelconque des revendications précédentes, dans lequel l'appareil périphérique (100) comprend un port USB.

4. Appareil périphérique (100) selon l'une quelconque des revendications précédentes, dans lequel l'appareil périphérique (100) comprend un dispositif de modulation par déplacement de fréquence destiné à moduler des données numériques en des signaux audiofréquence (400).

5. Système de traitement de données comportant un ordinateur (100) muni d'une interface audio (203) et d'un appareil périphérique (100) selon l'une quelconque des revendications 1 à 4 connecté à l'interface audio (203).

6. Système de traitement de données selon la revendication 5, dans lequel l'ordinateur comprend un dispositif de conversion destiné à convertir le signal audio fréquence (400) en des données audio numériques (500).

7. Système de traitement de données selon la revendication 6, dans lequel le système de traitement de données comprend un serveur (300) destiné à recevoir les données audio (500) en provenance de l'ordinateur (200).

8. Procédé de transmission de données entre un ordinateur (200) et un appareil périphérique (100), dans lequel l'appareil périphérique (100) comprend une interface audio (103) destinée à transmettre des données à l'ordinateur (200) par l'intermédiaire d'un signal audiofréquence (400), dans lequel l'appareil périphérique (100) est un appareil lecteur de cartes destiné à lire des documents de valeur et de sécurité (105), dans lequel l'interface audio (103) met en oeuvre une norme de modem, comportant les étapes consistant à :
- lire (S101) des données au moyen de l'appareil périphérique (100) ;
- convertir (S102), les données en un signal audiofréquence (400) dans l'appareil périphérique (100) ;
- transmettre (S103) le signal audiofréquence (400) à l'ordinateur (200) par l'intermédiaire de l'interface audio (103).

9. Procédé selon la revendication 8, dans lequel le procédé comprend l'étape consistant à convertir le signal audiofréquence (400) en des données audio numériques (500) au moyen de l'ordinateur (200).

10. Procédé selon la revendication 9, dans lequel le procédé comprend l'étape consistant à envoyer les données audio converties (500) de l'ordinateur (200) à un serveur (300).

11. Procédé selon l'une quelconque des revendications 8 à 10, dans lequel le procédé comprend l'étape consistant à recevoir des données audio (500) sur l'ordinateur (200) en provenance d'un serveur (300).

12. Procédé selon la revendication 11, dans lequel le procédé comprend l'étape consistant à convertir les données audio reçues (500) en un signal audiofréquence (400) dans l'ordinateur (200).

13. Procédé selon la revendication 12, dans lequel le procédé comprend l'étape consistant à transmettre le signal audiofréquence (400) de l'ordinateur (200) à l'appareil périphérique (100).
